# EUROPEAN PATENT SPECIFICATION

(11) **EP 3 815 494 B1**
(45) Date of publication and mention of the grant of the patent: **06.07.2022**
(21) Application number: 20204704.9
(22) Date of filing: 29.10.2020
(51) Int. Cl.: A01C 5/06, A01G 13/02

(54) **SOWING MACHINE FOR DISTRIBUTING SEEDS ON THE GROUND AND METHOD FOR OPERATING SAID MACHINE**
SÄMASCHINE ZUM VERTEILEN VON SAATGUT AUF DEM BODEN UND VERFAHREN ZUM BETRIEB DIESER MASCHINE
SEMOIR POUR LA DISTRIBUTION DE GRAINES SUR LE SOL ET PROCÉDÉ DE FONCTIONNEMENT DUDIT SEMOIR

(30) Priority: 29.10.2019 IT 201900019930
(43) Date of publication of application: 05.05.2021
(73) Proprietor: ROTER ITALIA S.r.l., 46035 Ostiglia (MN) (IT)
(72) Inventor: FORIGO, Alberto, 46035 Ostiglia (MN) (IT)
(74) Representative: Gallo, Luca

(56) References cited:
- JP-A- 2003 143 905
- JP-U- H02 107 953
- US-A- 3 180 290
- US-A- 3 945 330

## Description

### Field of application

The present invention regards a sowing machine for distributing seeds on the ground and a method for operating said machine, according to the preamble of the respective independent claims.

The present machine is inserted in the scope of the industrial field of production of farming machines and it is advantageously intended to be connected to a tractor in order to be driven over the ground intended to receive the seeds.

The present sowing machine and its operating method are adapted to precisely deposit doses of seeds on the ground, aligned along a direction substantially parallel to the advancing direction of the tractor.

Therefore, the present machine and its operating method advantageously have use in the farming field in order to sow cultivations for example vegetable cultivations, and in particular in order to sow cultivations on terrain susceptible of being treated by means of mulching.

### Field of the art

In the field of production of farming machines, sowing machines for distributing seeds on the ground in an automated manner have been known for some time. Such sowing machines are mechanically connectable, in a removable manner, to drive machines, normally farming tractors, in order to be driven on the ground intended to host the seeds to be distributed.

As is known, the sowing machines are adapted to distribute the seeds on the ground, aligning them along one or more tracks that are substantially parallel to each other and parallel to the advancing direction of the tractor.

The sowing machines of known type are provided with a support frame mechanically connectable to the tractor, with a hopper supported by the support frame intended to contain the seeds to be distributed and with a blade projecting on the lower part, with curved form and susceptible of being partially inserted in the ground in order to obtain a rectilinear groove in the ground.

The hopper supported by the support frame is normally placed in communication with a metering device, placed below the sowing machine, it too fixed to the support frame and placed behind the blade with respect to the advancing sense of the tractor. In this manner, during the sowing operations, the sowing machine driven by the tractor distributes in the rectilinear groove, formed by means of the aforesaid blade, the seeds in a substantially uniform manner.

The sowing machines of known type, briefly described above, have in practice shown that they do not lack drawbacks.

The main drawback lies in the fact that such sowing machines of known type are not usable on terrain that was previously treated by means of mulching.

As is known, with the technical term "mulching" it is intended covering the ground with at least one layer of protection material (e.g. by means of covering the ground with a sheet of plastic material or with a bark layer), in order to prevent the growth of weeds, or more generally to protect the ground from external agents and maintain the properties thereof without requiring further treatments. For example, the layer of protection material allows retaining the moisture present in the ground, creating a microclimate that is favorable for the germination of the seed and the growth of the plant.

Indeed, the blade projecting on the lower part of the sowing machines of the above-described known type, if used on a ground on which a cover cloth has been previously extended, would form the aforesaid rectilinear groove on the cover cloth itself, allowing external agents to come into contact with the ground itself and therefore considerably negatively affecting the protective capacity of the cover cloth.

For the purpose of at least partially overcoming the drawbacks manifested by the sowing machines of known type, briefly described above, sowing machines have been known for some time that are normally termed, in the technical jargon of the field, "precision" sowing machines. Such precision sowing machines are normally provided with a disc for distributing the seeds, which is rotatably mounted on the support frame around a substantially horizontal axis and carries, mounted thereon, a plurality of distribution spouts placed in flow connection with the hopper supported by the frame.

The spouts are radially arranged and terminate at the external edge of the distribution disc, and are extended at least for a terminal section thereof outside the disc itself. Such terminal section of each of the distribution spouts is intended to be cyclically at least partially immersed in the previously-mulched ground, making an opening in the cover cloth extended on the ground and laying in the latter a corresponding dose of seeds, coming from the hopper.

Also the aforesaid precision sowing machines have in practice shown that they do not lack drawbacks.

The main drawback lies in the fact that the insertion of the distribution spouts within the ground still ruins the cover cloth laid on the ground with the mulching treatment, since such cover cloth tends to be broken in an irregular manner and to an even greater extent the deeper each distribution spout is thrust.

For the purpose of overcoming the aforesaid drawback of the precision sowing machines, briefly described above, sowing machines and mulching machines are known, for example of the type described in the Japanese patent application JP 2003143905, which are provided with sowing means placed upstream with respect to the mulching means, so as to extend the cover cloth on the already-sown ground.

Such sowing machines and mulching machines are also provided with cutting means adapted to make through openings in the cover cloth, which are provided with a size that is suitably controlled in a manner such to be sufficiently narrow so as to avoid negatively affecting the protective capacity of the cover cloth and, simultaneously, sufficiently wide to house the stem of the cultivation intended to germinate from the seed deposited on the ground.

In addition, such sowing machines and mulching machines of known type are provided with a control unit adapted to synchronize the actuation of the cutting means with the actuation of the sowing means so as to make the through openings at areas of the cover cloth intended to be placed above a corresponding seed. Also the aforesaid sowing machines and mulching machines have in practice shown that they do not lack drawbacks.

In particular, the main drawback of such sowing machines and mulching machines lies in the fact that the cutting means provided therein are generally provided with two blades facing each other, which are susceptible of abutting against the other blade with the cover cloth itself interposed. The aforesaid two blades must therefore be placed in a lifted position with respect to the ground, in order to be able to cut the cover cloth interposed therebetween.

In practice, it was found that such distance of the cutting point from the ground introduces a factor of imprecision in the alignment between the through opening and the position of the seed on the ground, since the cover cloth can undergo distortions between the cutting point and the point at which it reaches the ground.

In addition, in order to identify the areas where the cloth is to be cut, it is necessary to execute complicated calculations based on the advancing speed of the sowing machine and based on the speed for extending the cover cloth, which can introduce further factors of imprecision in the alignment between the through opening and the position of the seed on the ground.

### Presentation of the invention

The main object of the present invention is therefore that of overcoming the drawbacks manifested by the solutions of known type, by providing a sowing machine for distributing seeds on the ground and an operating method thereof which allow distributing seeds on the ground and subsequently covering the sown ground with a cover cloth in which through openings are made at the exact position where the seed has been deposited.

Another object of the present invention is to provide a sowing machine for distributing seeds on the ground and an operating method thereof which avoid negatively affecting the protective properties of the protection material laid on the ground by means of mulching.

Another object of the present invention is to provide a sowing machine for distributing seeds on the ground that is functional in operation and reliable.

Another object of the present invention is to provide a sowing machine for distributing seeds on the ground which is durable over time and which does not require maintenance operations.

### Brief description of the drawings

The technical characteristics of the invention, according to the aforesaid objects, can be clearly seen from the content of the below-reported claims and the advantages thereof will be more evident from the following detailed description, made with reference to the enclosed drawings, which represent a merely exemplifying and non-limiting embodiment of the invention, in which:
- figure 1 shows a perspective view of a sowing machine for distributing seeds on the ground, object of the present invention, in accordance with a first embodiment of the cutting means;
- figure 2 shows a plan view of the sowing machine, object of the present invention, in accordance with the first embodiment of the cutting means of figure 1;
- figure 3 shows a section view of the sowing machine, object of the present invention, made along the section trace III-III of figure 2;
- figure 4 shows a perspective view of a detail of the section of figure 3 in order to better illustrate the first embodiment of the cutting means;
- figure 5 shows a perspective view of a sowing machine for distributing seeds on the ground, object of the present invention, in accordance with a second embodiment of the cutting means;
- figure 6 shows a plan view of the sowing machine, object of the present invention, in accordance with the second embodiment of the cutting means of figure 5;
- figure 7 shows a section view of the sowing machine, object of the present invention, made along the section trace VII-VII of figure 6;
- figure 8 shows a perspective view of a detail of the section of figure 7 in order to better illustrate the second embodiment of the cutting means;
- figure 9 shows a perspective view of a sowing machine for distributing seeds on the ground, object of the present invention, in accordance with a third embodiment of the cutting means;
- figure 10 shows a plan view of the sowing machine, object of the present invention, in accordance with the third embodiment of the cutting means of figure 9;
- figure 11 shows a section view of the sowing machine, object of the present invention, made along the section trace XI-XI of figure 10;
- figure 12 shows a perspective view of a detail of the section of figure 11 in order to better illustrate the third embodiment of the cutting means;
- figure 13 shows a block diagram of the logic control unit of the sowing machine, object of the present invention, and the relations between its modules and other parts of the sowing machine itself.

### Detailed description of a preferred embodiment

With reference to the enclosed drawings, reference number 1 overall indicates the sowing machine for distributing seeds on the ground, object of the present invention, which is intended to be moved on the ground along an advancing direction Y. In particular, the sowing machine 1 is advantageously intended to be fixed to a tractor, such as a tractor with wheels or with tracks of farming type in order to be towed along the advancing direction Y during the operation thereof.

With the term "seeds" it must be intended hereinbelow any type of seed that is susceptible of being laid on or in the ground in order to germinate and grow at least one plant of any type, purpose and nature. Normally, the present seeds are in the form of grains and are laid in the ground at a depth of several centimeters, e.g. a depth comprised between 1 and 6 cm.

The sowing machine 1, object of the present invention, is advantageously employable for precisely distributing the seeds in a groove made in the ground, in particular for vegetable cultivation.

Otherwise, the sowing machine 1, object of the present invention, is advantageously also employable for precisely depositing the aligned seeds on the surface of the ground, without making any groove, for example for vegetable cultivation.

According to the present invention, the sowing machine 1 comprises a support frame 2 advantageously intended to be fixed to a tractor, e.g. at coupling points 23, in order to be towed along the advancing direction Y.

In accordance with the enclosed figures, the support frame 2 advantageously comprises at least one crosspiece extended between two lateral flanks 24 of the support frame 2 itself.

Preferably, moreover, the support frame 2 is made of metallic material, in particular a metallic material that is resistant to the stresses to which the support frame 2 is intended to be subjected during its operating lifetime, such as for example steel.

The present sowing machine 1 also comprises sowing means 3, which are mounted on the support frame 2 and are adapted to distribute a plurality of seeds S on the ground in order to obtain a sown ground. More in detail, as better described hereinbelow, the sowing means 3 comprise at least one containment hopper 19 for the seeds S which is supported by the support frame 2, preferably in a lifted position with respect to the ground.

In addition, the sowing means 3 comprise at least one manifold 20 interposed between the containment hopper 19 and the ground. More in detail, the manifold 20 is placed in communication with an outlet door 28 of the containment hopper 19 in order to receive the seeds S from the latter and is susceptible of guiding the seeds S that fall via gravity towards the ground, distributing an ordered track of seeds S that are substantially aligned with each other.

In accordance with the enclosed figures, the present sowing machine 1 is advantageously provided with a plurality of manifolds 20 so as to simultaneously distribute multiple ordered tracks of seeds S, preferably parallel to each other and parallel to the advancing direction Y of the sowing machine 1. Preferably, moreover, the sowing machine 1 is also provided with a plurality of containment hoppers 19, and in particular one for each manifold 20.

According to the invention, the sowing machine 1 also comprises sensor means 4 associated with the sowing means 3 and adapted to detect the passage of the seeds S which are distributed on the ground. In particular, the sensor means 4 are preferably optical means, such as for example a photocell, which are associated with the manifold 20 of the sowing means 3, as is better described hereinbelow.

The present sowing machine 1 also comprises mulching means 5, which comprise at least one reel wound with a cover cloth 6 and are adapted to extend such cover cloth 6 on the ground. According to the invention, moreover, the mulching means 5 are mounted on the support frame 2 downstream with respect to the sowing means 3 along the advancing direction Y of the sowing machine 1 in order to extend the cover cloth 6 on the sown ground.

In particular, the cover cloth 6 is advantageously of the type commonly intended for operations of mulching the ground, for example it is a cloth made of plastic material or bioplastic material and it is preferably provided with a thickness comprised between 8 and 50 micron and more preferably comprised between 15 and 30 micron.

According to the invention, the present sowing machine 1 also comprises, cutting means 7 for cutting the cover cloth 6, of the type better described hereinbelow. Such cutting means 7 are mounted on the support frame 2 downstream with respect to the mulching means 5 in the advancing direction Y of the sowing machine 1 and are adapted to make a plurality of through openings 61 in the cover cloth 6 extended by the mulching means 5.

The sowing machine 1 also comprises a logic control unit 8 operatively connected to the sensor means 4 and to the cutting means 7 and configured to drive the latter to make the plurality of through openings 61 in areas of the cover cloth 6, which are susceptible of being extended at the seeds S distributed on the ground by the sowing means 3.

In accordance with the idea underlying the present invention, the cutting means 7 of the present sowing machine 1 are placed in proximity to the ground and are adapted to make the through openings 61 on the cover cloth 6 extended in abutment on the sown ground. In other words, therefore, the cutting means 7 which act on the cover cloth 6 are adapted to cooperate with the ground against which the cover cloth 6 itself is abuttingly extended, so as to make the through openings 61 directly at the position of the seeds S on the sown ground.

More in detail, the mulching means 5 are adapted to extend the cover cloth 6 between a first height X1, at which the reel is supported with the cover cloth 6 itself wound, and a second height X2, lower than the first height X1 and susceptible of being placed in contact with the ground. Preferably, moreover, the aforesaid second height X2 substantially coincides with the minimum height of the sowing machine 1, from which the entire present sowing machine 1 is elevated. In other words, therefore, the second height X2 is the height of the sowing machine 1 intended to abut against the ground during the operation thereof.

In addition, the cutting means 7 are provided with a cutting member 71 susceptible of intercepting the cover cloth 6 in the second height X2 in order to make the through openings 61.

The cover cloth 6 is unwound on the ground starting from an idle roller 80 advantageously abutted against a transport roller 84 which is abutted against the ground and which is also of idle type. Therefore, upon varying the speed of the machine 1, the cloth is unwound on the ground accordingly, for the section traveled by the machine.

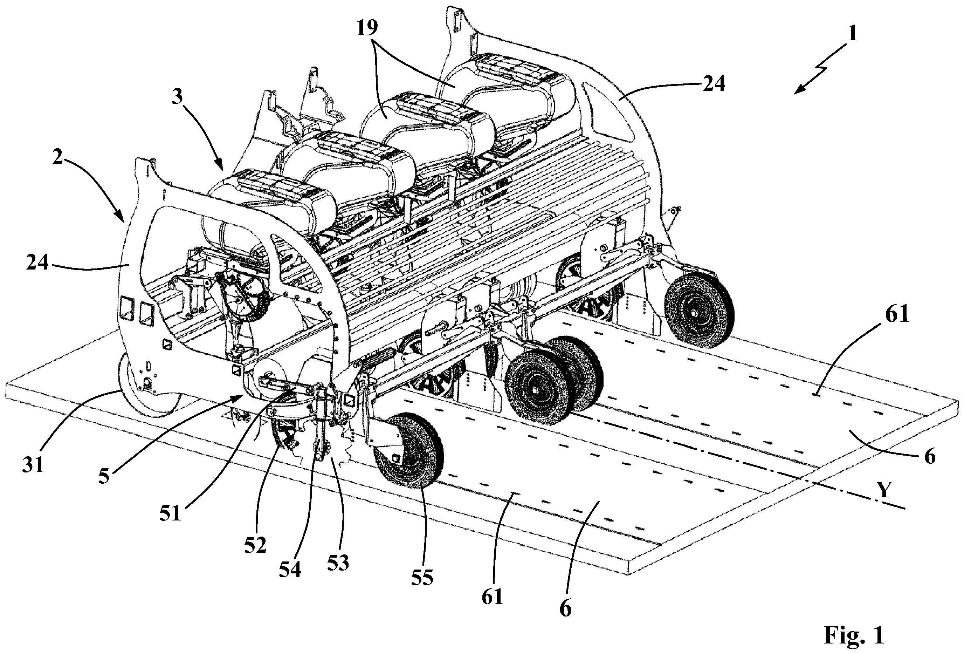

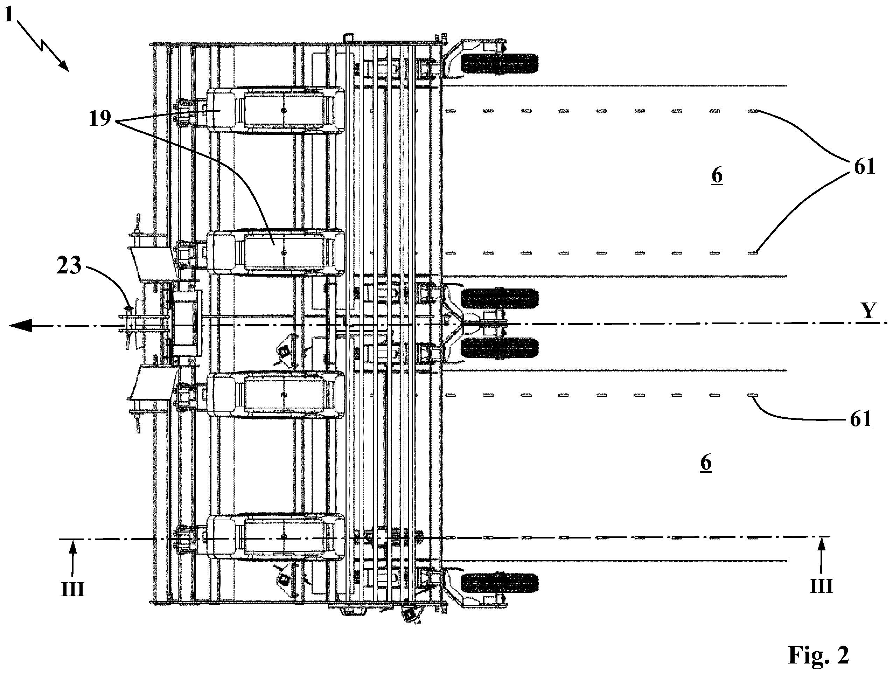

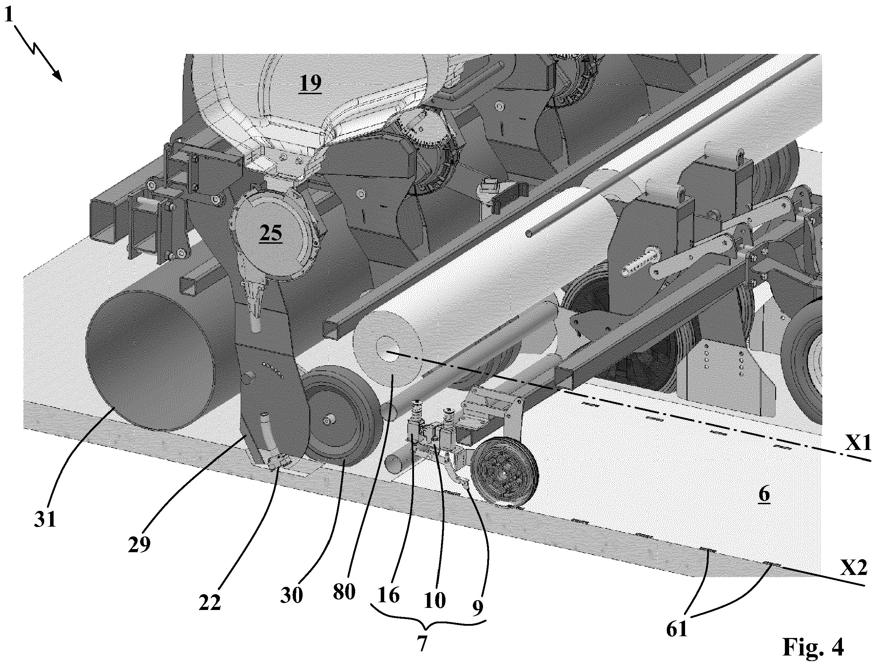

More in detail, in accordance with a first embodiment of the cutting means 7, illustrated in the enclosed figures 1-4, such cutting means 7 are of mechanical type. In particular, the cutting member 71 of the cutting means 7 of mechanical type comprises at least one blade 9, and in particular comprises a number of blades 9 equal to the number of manifolds 20 of the sowing means 3, so as to make the through openings 61 at each track of seeds S distributed on the ground. Advantageously, moreover, each blade 9 of the cutting member 71 is movably associated with the support frame 2 and in particular it is movable between a first position, distal with respect to the cover cloth 6 placed at the second height X2, and a second position, for intercepting the cover cloth 6 placed at the second height X2. Preferably, moreover, the aforesaid second position of the blade 9 is placed at a height lower than the second height X2, with the blade 9 at least partially embedded in the ground.

Advantageously, in addition, the cutting means 7 of mechanical type also comprise an actuator 10 operatively connected to the logic control unit 8 and to the blade 9 and susceptible of being driven by the logic control unit 8 to move the blade 9 between the first and the second positions in order to make the through openings 61. Preferably, moreover, the cutting means 7 comprise a plurality of actuators 10, and in particular comprise an actuator 10 for each blade 9.

Preferably, moreover, the actuator 10 of the cutting means 7 is of electromagnetic type. More in detail, such actuator 10 comprises at least one electromagnet 16, of type per se known and therefore not described in detail hereinbelow, which is electrically connected to the logic control unit 8 and is adapted to receive from the latter an electric current drive signal for moving the blade 9 between the first and the second positions.

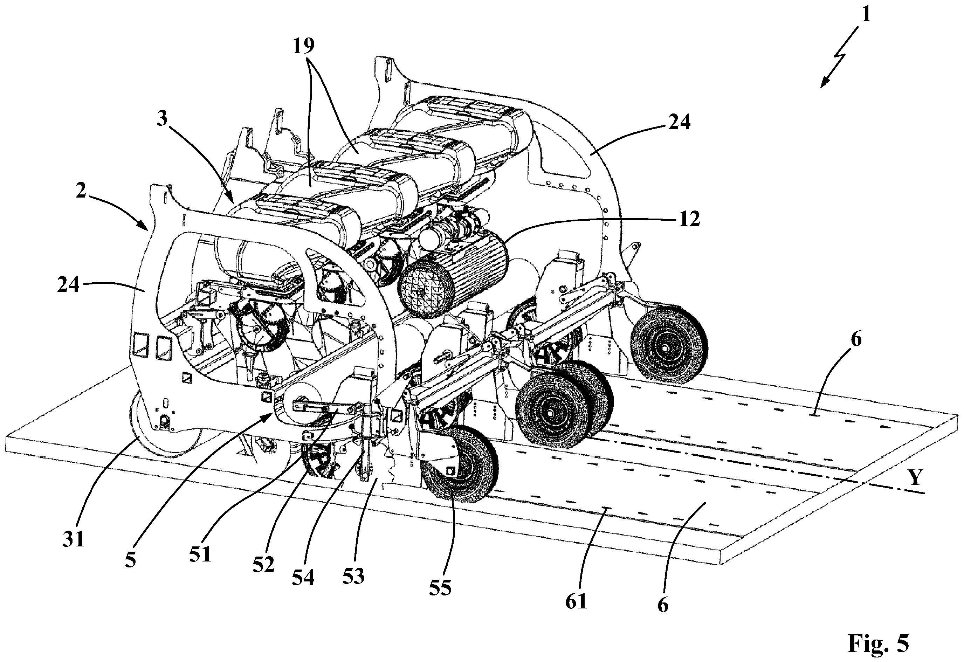

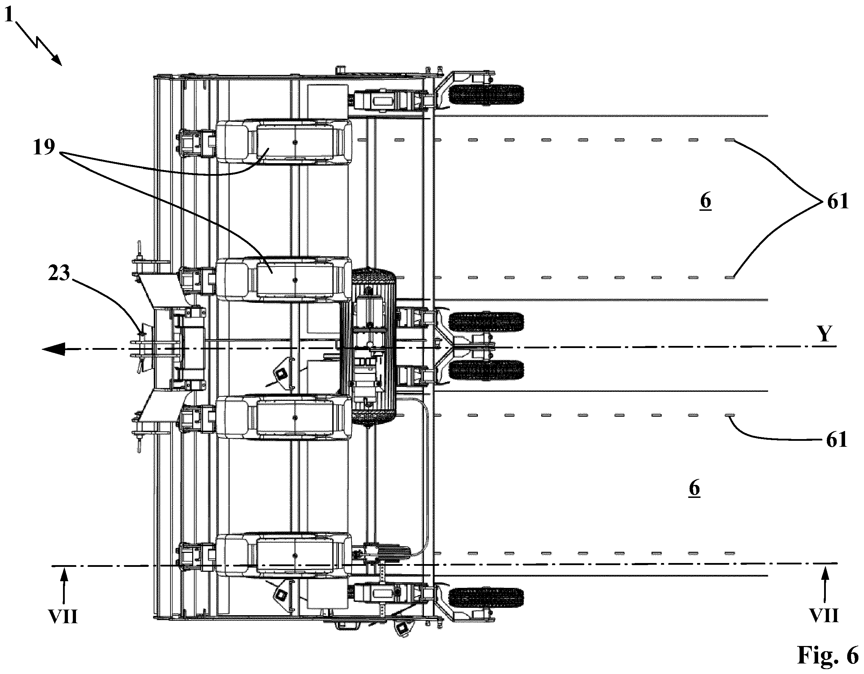

Advantageously, in accordance with a second embodiment of the cutting means 7, illustrated in the enclosed figures 5-8, such cutting means 7 are of pneumatic type. In particular, the cutting member 71 of the cutting means 7 of pneumatic type comprises at least one compressed air flow susceptible of intercepting the cover cloth 6 at the second height X2 in order to make the through openings 61.

More in detail, the cutting means 7 of pneumatic type comprise at least one pneumatic nozzle 11 through which the compressed air flow of the cutting member 71 is susceptible of being dispensed. Preferably, moreover, the cutting means 7 comprise a plurality of pneumatic nozzles 11, of a number equal to the number of manifolds 20 of the sowing means 3 so as to make the through openings 61 at each track of seeds S distributed on the ground. Advantageously, moreover, each pneumatic nozzle 11 is provided with a first solenoid valve 17 electrically connected to the logic control unit 8 and adapted to receive from the latter an electric current drive signal for dispensing the compressed air flow.

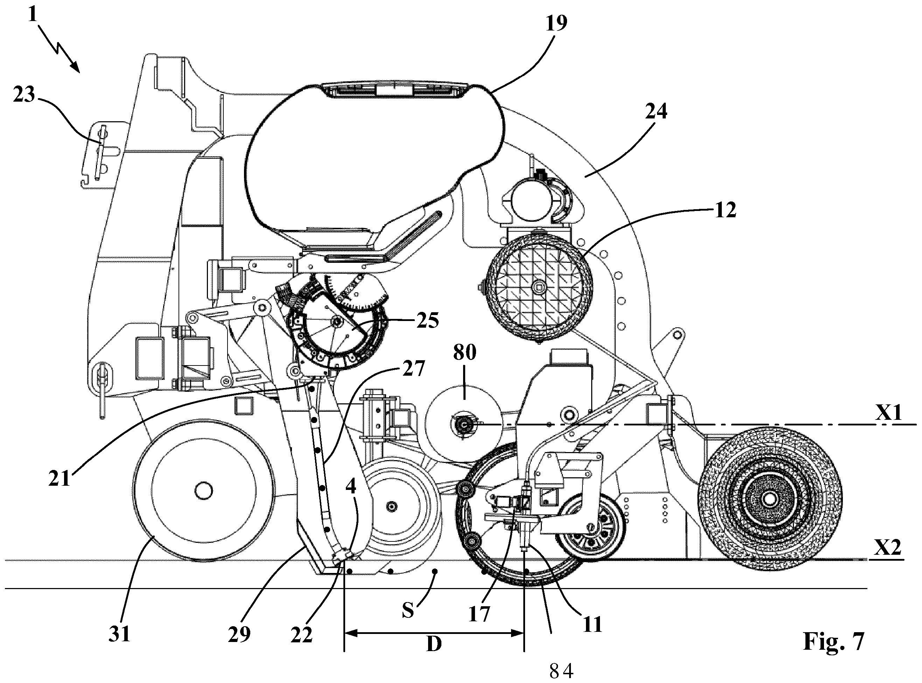

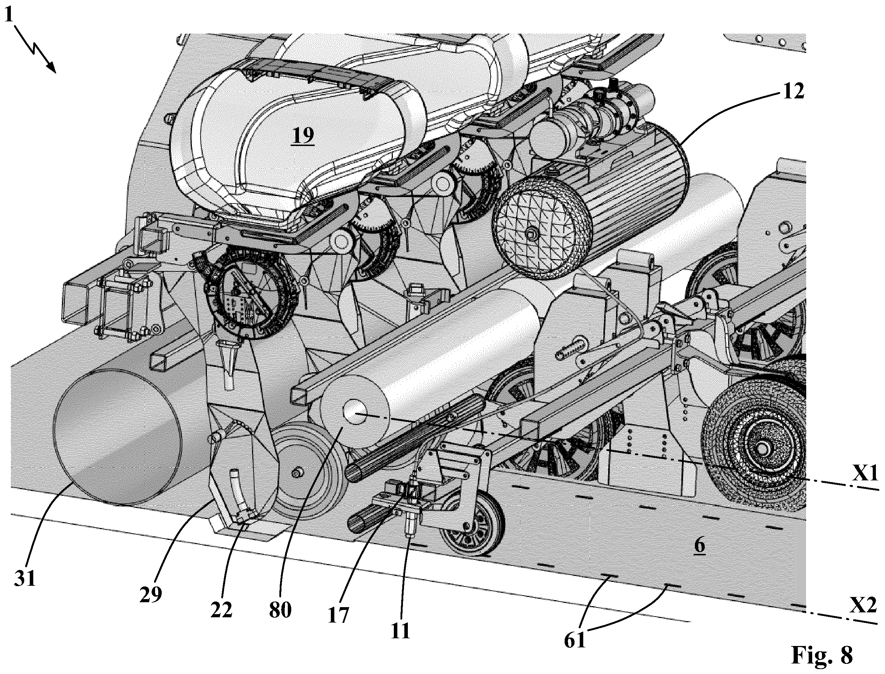

In accordance with the enclosed figures 7 and 8, moreover, each pneumatic nozzle 11 is provided with an ejection section, from which the compressed air flow is susceptible of exiting, which is substantially positioned at the second height X2 and faces the cover cloth 6. Preferably, moreover, the compressed air flow exiting from the pneumatic nozzle 11 is susceptible of being extended from the ejection section of the pneumatic nozzle 11 itself to a height lower than the second height X2 in order to at least partially embed in the ground.

Advantageously, the cutting means 7 of pneumatic type also comprise a compressor 12 in flow communication with the pneumatic nozzle 11, and in particular with each pneumatic nozzle 11, and adapted to generate the compressed air flow susceptible of being dispensed from each pneumatic nozzle 11. In the enclosed figures 5-8, for practical reasons, only one duct of connection between the compressor 12 and one of the pneumatic nozzles 11 is shown; of course, it is to be intended that the cutting means 7 are provided with a number of such connection ducts equal to the number of pneumatic nozzles 11.

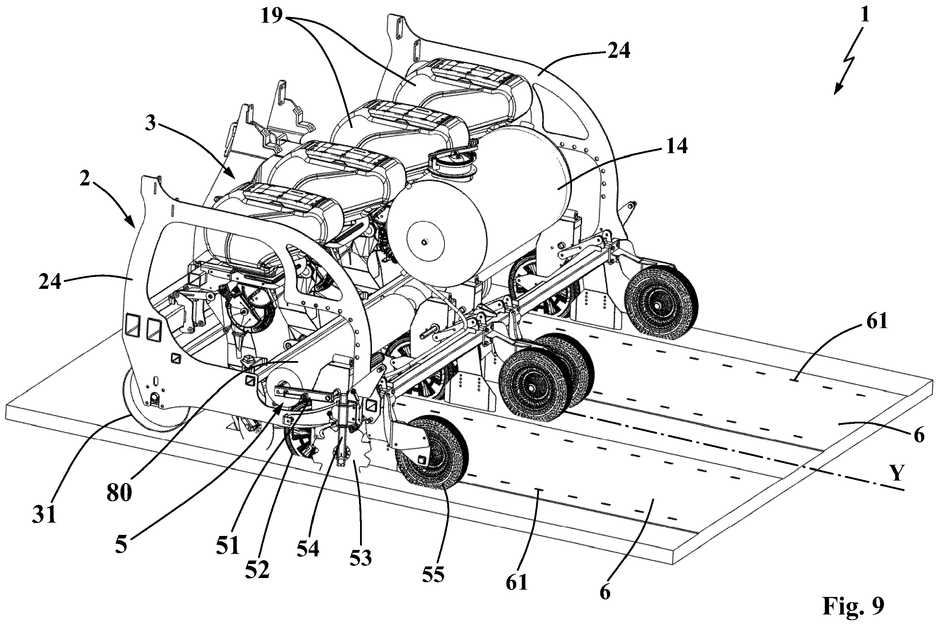

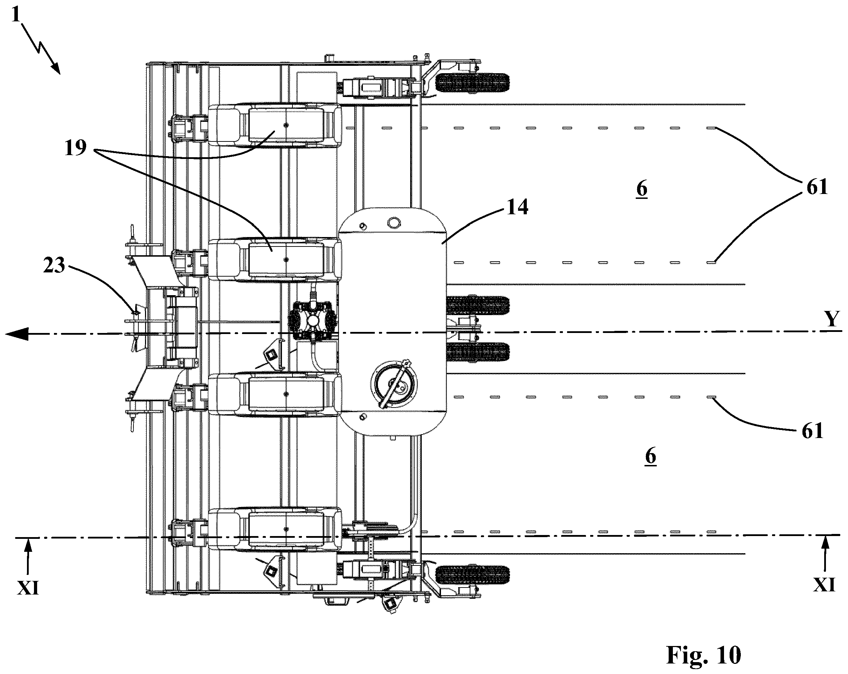

Advantageously, in accordance with a third embodiment of the cutting means 7, illustrated in the enclosed figures 9-12, such cutting means 7 are of hydraulic type. In particular, the cutting member 71 of the cutting means 7 of hydraulic type comprises at least one pressurized liquid jet susceptible of intercepting the cover cloth 6 at the second height X2 in order to make the through openings 61.

More in detail, the cutting means 7 of hydraulic type comprise at least one hydraulic nozzle 13 through which is susceptible of being dispensed the pressurized liquid jet of the cutting member 71. Preferably, moreover, the cutting means 7 comprise a plurality of hydraulic nozzles 13, of a number equal to the number of manifolds 20 of the sowing means 3 so as to make the through openings 61 at each track of seeds S distributed on the ground. Advantageously, moreover, each hydraulic nozzle 13 is provided with a second solenoid valve 18 electrically connected to the logic control unit 8 and adapted to receive from the latter an electric current drive signal for dispensing the pressurized liquid jet.

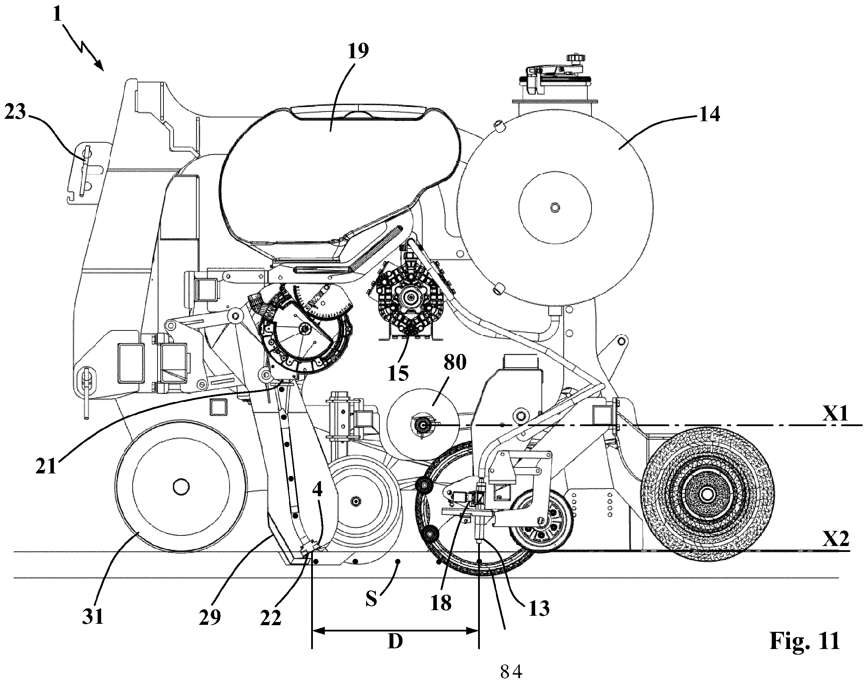

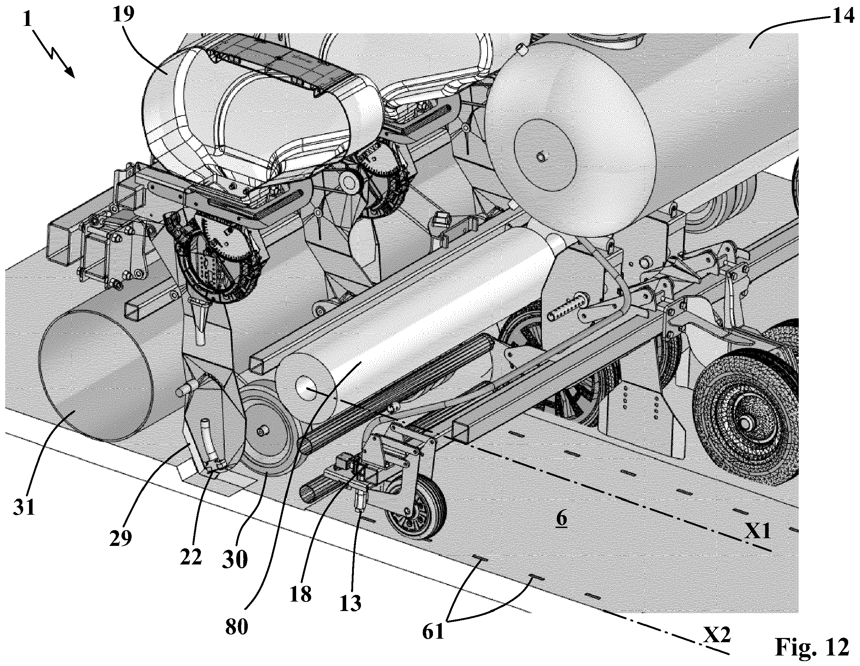

In accordance with the enclosed figures 11 and 12, moreover, each hydraulic nozzle 13 is provided with an ejection section, from which the pressurized liquid jet is susceptible of exiting, which is substantially positioned at the second height X2 and facing the cover cloth 6. Preferably, moreover, the pressurized liquid jet exiting from the hydraulic nozzle 13 is susceptible of being extended from the ejection section of the hydraulic nozzle 13 itself up to a height lower than the second height X2 in order to partially embed in the ground.

Advantageously, the cutting means 7 of hydraulic type also comprise a containment tank 14 hydraulically connected to each hydraulic nozzle 13 and susceptible of containing the liquid intended to be dispensed by the hydraulic nozzles 13. In particular, such liquid is preferably water. In the enclosed figures 9-12, for practical reasons, only one duct of connection between the containment tank 14 and one of the hydraulic nozzles 13 is indicated; of course, it is to be intended that the cutting means 7 are provided with a number of such connection ducts equal to the number of hydraulic nozzles 13.

The aforesaid cutting means 7 of hydraulic type also comprise at least one pump 15 fluid-dynamically interposed between the hydraulic nozzle 13 and the containment tank 14 and adapted to convey, with a pre-established pressure, the liquid from the containment tank 14 to the hydraulic nozzles 13 in order to generate the pressurized liquid jet.

As indicated above in the first, second and third embodiment of the cutting means 7, the cutting means 7 are preferably electrically connected with the logic control unit 8 in order to receive from the latter an electric current signal adapted to drive the cutting member 71 of the cutting means 7 to make the through openings 61 at the areas of the cover cloth 6 placed to cover the seeds S. In particular, the position of the areas is identified by the logic control unit 8 based on the detections executed by the sensor means 4, as is described in more detail hereinbelow.

In accordance with the enclosed figures, as is indicated above, the sowing means 3 of the sowing machine 1 comprise one or more containment hoppers 19, each of which placed in connection with a corresponding manifold 20 for distributing an ordered track of seeds S on the ground.

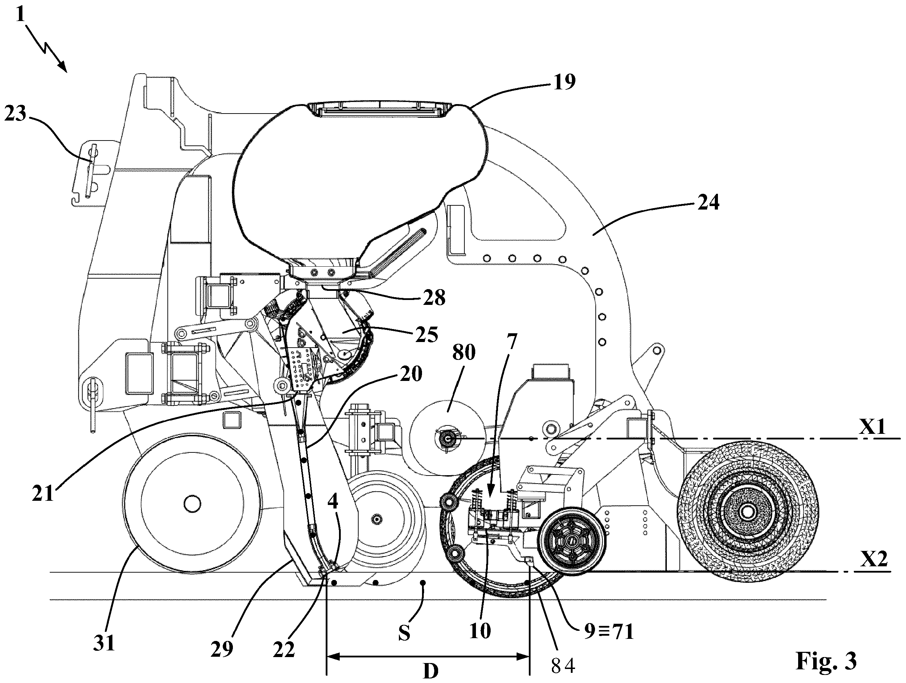

More in detail, in accordance with the enclosed figures 3, 7 and 11, the sowing means 3 also comprise a distributor 25 interposed between each containment hopper 19 and the underlying manifold 20 and adapted to identify the seeds S which are distributed on the ground through the manifold 20 itself.

In particular, the distributor 25 can be of mechanical type, or of pneumatic type.

More in detail, the distributor 25 of mechanical type comprises a stator fixed to the containment hopper 19 and to the manifold 20 and provided with a first upper opening in communication with the containment hopper 19 in order to receive the seeds S that fall via gravity, and with a second lower opening, in communication with the manifold 20 in order to discharge the seeds S at its interior, always via gravity.

In addition, the mechanical distributor 25 comprises a rotor rotatably inserted within the stator and peripherally provided with a plurality of cells equidistant from each other and each adapted to contain a dose of seeds S coming from the containment hopper 19.

More in detail, the first opening of the stator is cyclically in communication with each cell of the rotor in order to feed them with the doses of seeds S coming from the containment hopper 19. Likewise, the second opening of the stator is cyclically in communication with each cell of the rotor in order to receive therefrom the doses of seeds S and discharge them into the manifold 20. In operation, therefore, the rotation of the rotor allows transporting the dose of seeds S contained in each cell of the rotor from the first upper opening of the stator to the second lower opening of the stator itself, i.e. from the containment hopper 19 to the manifold 20, identifying each dose of seeds S from the preceding and from the subsequent doses housed in the adjacent cells of the rotor.

Otherwise, as indicated above, the distributor 25 can be of pneumatic type, i.e. provided with a suction tube through which the air within the distributor 25 is suctioned, in order to create reduced pressure at its interior that is adapted to suction the seeds S from the containment hopper 19. The distributor 25 is also provided with a perforated disc (not illustrated in the enclosed figures), which is rotatably housed inside the distributor 25 and is provided with a plurality of holes equally-distributed along a peripheral circumference thereof. More in detail, the perforated disc delimits, within the distributor 25, two chambers placed at different pneumatic pressure, of which a first chamber is in communication with the containment hopper 19 and a second chamber is in communication with the manifold 20. In particular, moreover, the second chamber of the distributor 25 is placed in reduced pressure with respect to the first chamber, in a manner such that the seeds S, which arrive from the containment hopper 19, remain adhered, one to each hole of the perforated disc and in this manner they are identified, i.e. separated one from the other.

Subsequently, the rotation of the perforated disc transports each seed S from the outlet door 28 of the containment hopper 19 to an inlet section 21 of the manifold 20, where the reduced pressure that maintains the seed S adhered to the perforated disc (e.g. through a mechanical member slidingly placed on the perforated disc itself) is eliminated and the seed S falls via gravity within the manifold 20. Subsequently, the seed S continues its fall via gravity within the manifold 20 until it comes into contact with the ground where it is deposited.

More in detail, the manifold 20 is extended between the inlet section 21, susceptible of receiving the seeds S from the containment hopper 19 as described above, and an outlet section 22, which faces the ground and is susceptible of distributing the seeds S on the ground itself, in particular, the outlet section 22 is placed at the second height X2, as illustrated in the enclosed figures 3, 7 and 11, in order to deposit the seeds S directly on the ground.

Preferably, moreover, the sensor means 4 are placed at the aforesaid outlet section 22 of the manifold 20 and are adapted to detect the passage of the seeds S exiting from the manifold 20 itself.

Advantageously, moreover, due to the presence of the distributor 25 which identifies each seed S, or dose of seeds S, that falls in the manifold 20, the sensor means 4 are capable of more precisely detecting the passage of each seed S, or dose of seeds S, that is deposited on the ground.

Advantageously, the sowing means 3 also comprise a blade 29 projecting below the manifold 20, preferably with curved shape and placed upstream of the outlet section 22 thereof in the advancing direction Y of the sowing machine 1. In particular, the below-projecting blade 29 is susceptible of being partially inserted in the ground in order to make a rectilinear groove in the ground upstream with respect to the outlet section 22 of the manifold 20, which is thus susceptible of depositing the seeds S within the aforesaid groove. Advantageously, moreover, the sowing means 3 comprise at least one rear wheel 30 rotatably and idly mounted on the support frame 2, downstream with respect to the outlet section 22 of the manifold 20 in the advancing direction Y of the sowing machine 1 and susceptible of supporting the sowing machine 1 during the sowing operations. In particular, such rear wheel 30 is susceptible of rotating on the ground via rolling friction during the advancement of the sowing machine 1 and of crushing the ground against which it is placed in abutment in order to close the groove made by the below-projecting blade 29, with the seeds S deposited at its interior.

Advantageously, moreover, the rear wheel 30 is mounted on the support frame 2 by means of articulated connection means, such as for example an articulated quadrilateral, which allow vertically moving the wheel with respect to the manifold 20, in order to vary the height for which the below-projecting blade 29 is susceptible of being inserted in the ground so as to consequently vary the depth of the groove that such blade makes in the ground.

In accordance with a different embodiment not illustrated in the enclosed figures, the rear wheel 30 can be substituted with a slide, susceptible of sliding in contact with the ground in order to close the groove made by the below-projecting blade 29, with the seeds S deposited at its interior.

In accordance with the enclosed figures 1, 5 and 9, moreover, the mulching means 5 comprise at least one support element 51 for supporting the reel wound with the cover cloth 6, and preferably comprise a pair of support brackets, each of which extended between a first end, pivoted to a corresponding lateral flank 24 of the support frame 2, and an opposite second end on which the reel is rotatably mounted.

In particular, as mentioned above, the support brackets of the support element 51 are adapted to support the reel at a first height X1 that is raised with respect to the ground and preferably with a main extension axis of the reel placed substantially parallel to the ground and more preferably orthogonal to the advancing direction Y of the sowing machine 1.

Advantageously, moreover, the mulching means 5 comprise at least one extending member 52, which is interposed between the support element 51 and the ground and is adapted to unroll the cover cloth 6 from the reel in order to bring it to descend from the first height X1 to the second height X2 and extend it on the sown ground.

In accordance with the embodiment illustrated in the enclosed figures, the aforesaid extending member 52 is advantageously attained by a pair of wheels idly mounted at the two lateral flanks 24 of the support frame 2 and susceptible of rotating via rolling friction with the ground during the advancement of the sowing machine 1. In addition, the two support brackets of the support element 51 are adapted to support the reel in abutment against the pair of idle wheels of the extending member 52. In operation, therefore, during the advancement of the sowing machine 1 along the advancing direction Y, the idle wheels tangentially intercept the reel 3, bringing it in rotation by means of rolling friction and driving the cover cloth 6 in rotation around the external surface of each wheel, up to depositing it on the ground.

Advantageously, moreover, the mulching means 5 of the sowing machine 1 comprise at least one lateral earthing up member 53 and preferably two lateral earthing up members, each of which mechanically associated with the support frame 2 and placed downstream with respect to the extending member 52 in the advancing direction Y of the sowing machine. In addition, each lateral earthing up member 53 is adapted to at least partially bury the cover cloth 6 extended on the sown ground, in particular at two lateral edges thereof, so as to retain in position in cover cloth 6 itself.

More in detail, in accordance with the preferred embodiment illustrated in the enclosed figures, each lateral earthing up member 53 comprises as rotary cutter rotatably mounted on a support rod 54, which is in turn fixed to a corresponding lateral flank of the support frame 2, in particular laterally with respect to the extending member 52. Advantageously, moreover, each rotary cutter is idly mounted on the corresponding support rod 54 with its rotation axis placed substantially parallel to the ground and is susceptible of being rotated by the rolling friction with the ground itself. In operation, each rotary cutter of the lateral earthing up member 53 is adapted to turn over the ground laterally with respect to the cover cloth 6, burying one of its two lateral edges.

Thus as indicated above, the logic control unit 8 is adapted to identify the position of the areas of the cover cloth 6 placed at the seeds S and to drive the cutting member 71 of the cutting means 7 to make the through openings 61 at such areas, with the cover cloth 6 at the second height X2, extended in abutment against the ground.

More in detail, according to the invention, the logic control unit 8 is programmed for detecting the advancing speed V of the sowing machine 1, by means of a speed measurement module 81, and for detecting the sowing moment for each seed S by means of the sensor means 4. In addition, the logic control unit 8 is programmed for driving the cutting means 7 to cut the cover cloth 6 in the areas extended at the seeds S, which were advantageously identified on the basis of the sowing moment and of the advancing speed V of the sowing machine 1.

It is also possible to set the sowing distance of the sowing means 3, in particular by adjusting the rotation speed of the perforated disc it is possible to vary the sowing distance. The sowing distance must be maintained as a function of the speed of the machine so that the logic control unit is connected in a per se known manner to the sowing means 3.

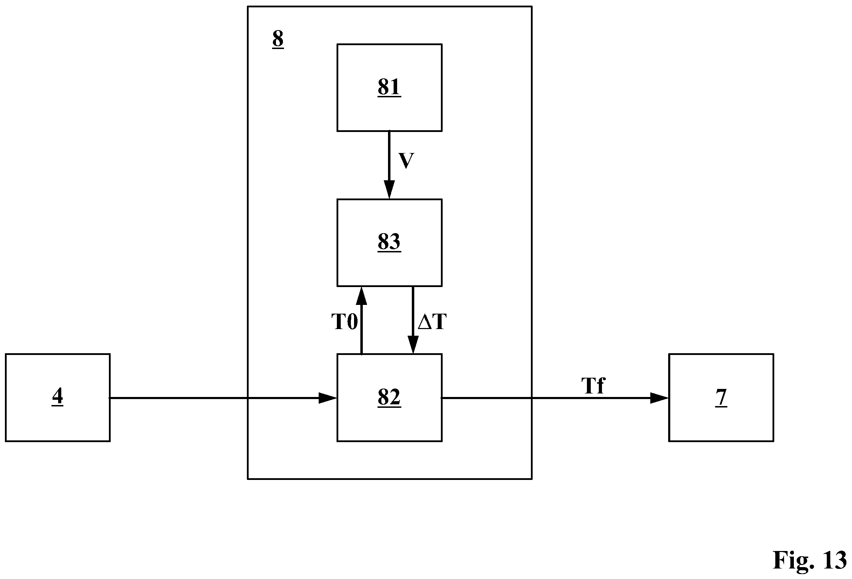

In accordance with the block diagram illustrated in figure 13, the logic control unit 8 comprises at least the speed measurement module 81, adapted to detect the advancing speed V of the sowing machine 1, and preferably also a time measurement module 82, which is programmed to measure the time that elapses starting from the sowing moment. More in detail, the time measurement module 82 is placed in data communication with the sensor means 4 and is adapted to identify the initial time T0 in which the sensor means 4 detect the passage of each seed S.

Preferably, the logic control unit 8 also comprises a processing module 83, which is in data communication both with the speed measurement module 81 in order to receive, from the latter, information relative to the advancing speed V, and with the time measurement module 82 in order to receive, from the latter, information relative to the initial time T0. In addition, the processing module 83 has set the distance D which separates the outlet section 22 of the manifold 20 of the sowing means 3 from the cutting means 7, and in particular from the cutting member 71 of the latter.

In addition, the processing module 83 is adapted to calculate the time interval ΔT necessary for the sowing machine 1 to travel the distance D at the advancing speed V, i.e. the time interval ΔT necessary for the cutting means 7 to reach the point at which the seed S has been detected by said sensor means 4, and to communicate such time interval ΔT to the time measurement module 82. Subsequently, therefore, the time measurement module 82 is adapted to calculate the final time Tf equal to the initial time instant T0 increased by the time interval ΔT and to send an electric drive signal to the cutting means 7 in such time instant Tf in order to drive the cutting means 7 themselves to make the through openings 61 at the areas of the cover cloth 6 extended at each seed S.

Advantageously, the above-described sowing machine 1 can also be associated with further farming machines, so as to execute further working of the same ground.

For example, in accordance with the enclosed figures, the sowing machine 1 advantageously comprises a front roller 31, rotatably connected to the support frame 2 upstream with respect to the sowing means 3 in the advancing direction Y of the sowing machine 1 and adapted to level the ground before executing the sowing. Advantageously, the present sowing machine 1 also comprises a second pair of idle wheels 55, which are rotatably mounted on the support frame 2 downstream with respect to the lateral earthing up member 53 of the mulching means 5 in the advancing direction Y of the sowing machine 1. In particular, each idle wheel 55 is susceptible of rolling above the ground turned over by the lateral earthing up member 53 so as to flatten it, thus sealing the lateral earthing up of the cover cloth 6.

Also forming the object of the present invention is a method for operating a sowing machine for distributing seeds on the ground of the above-described type and regarding which the same reference nomenclature will be employed for the sake of simplicity.

The operating present method provides for a sowing step in which the sowing means 3 distribute a plurality of seeds S on the ground, preferably making one or more ordered tracks of seeds S parallel to each other and parallel to the advancing direction Y of the sowing machine 1, so as to obtain the sown ground.

Preferably, the aforesaid sowing step provides for the actuation of the above-described distributor 25 of pneumatic type, which suctions the seeds S from the containment hopper 19, identifies them and allows them to fall one by one via gravity through the manifold 20, which deposits them on the ground.

Preferably, moreover, the manifold 20 deposits each seed S within a groove made by the below-projecting blade 29, and such groove is subsequently closed by the passage of the rear wheel 30 of the sowing means 3. According to the invention, moreover, during the aforesaid sowing step the sensor means 4 detect the passage of the seeds S and preferably detect the sowing moment in which each seed S passes through the outlet section 22 of the manifold 20 and is deposited on the ground.

Subsequently, the present method provides for mulching step of the sown ground, in which the mulching means 5 extend the cover cloth 6 on the sown ground. More in detail, in the mulching step, the mulching means 5 extend the cover cloth 6 from the first height X1, at which the reel is supported with the cover cloth 6 wound, to the second height X2, susceptible of being placed in abutment with the ground.

Preferably, moreover, the aforesaid mulching step also provides for the lateral earthing up of the cover cloth 6, in which each lateral earthing up member 53 of the mulching means 5 turns over the ground laterally with respect to the cover cloth 6, burying one of its two lateral edges so as to retain in position the cover cloth 6 itself.

Subsequently, the present method also provides for a cutting step, in which the cutting means 7 make the plurality of through openings 61 in the areas of the cover cloth 6 extended at the seeds S.

According to the idea underlying the present invention, the aforesaid cutting step of the present method is attained on the sown ground, and in particular is attained with the cover cloth 6 extended in abutment on the ground.

More in detail, in the cutting step, the cutting member 71 of the cutting means 7 is advantageously driven by the logic control unit 8 to intercept the cover cloth 6 extended at the second height X2 in order to make the through openings 61.

Advantageously, the aforesaid cutting step is driven by the above-described logic control unit 8. In particular, during the method for operating the machine 1, the logic control unit 8 detects the advancing speed V of the sowing machine 1, in particular by means of the speed measurement module 81, detects the sowing moment for each seed S by means of the sensor means 4 and, on the basis of such information, identifies the areas of the cover cloth 6 susceptible of being extended on the ground at the seeds S.

By means of the above-described operating method, the sowing machine 1 is therefore capable of executing first the sowing step and subsequently the mulching step.

In addition, the sowing machine 1 is capable of cutting the cover cloth 6 exactly at the areas of the cover cloth 6 placed to cover the seeds S placed on the ground. Indeed, since the cover cloth 6 is already extended on the ground and fixed in position, one eliminates the risk that the cover cloth 6 itself be distorted after the cutting step, losing the alignment between the through opening 61 and the seed S.

In addition, the above-described operating method advantageously allows varying the size of the through openings 61 without varying the shape of the cutting means. Indeed, it is sufficient to program the logic control unit 8 in order to drive the cutting member 71 of the cutting means 7 to intercept the cover cloth 6 for a more or less extended time interval, so as to make the through openings 61 with more or less elongated shapes. More clearly, the longer the cutting member 71 is driven to intercept the cover cloth 6, the more the through opening 61 is elongated due to the advancement of the sowing machine 1.

Advantageously, moreover, such variation of the through openings 61 can be attained with each of the above-described three embodiments of the cutting means 7.

The sowing machine 1 and its operating method thus conceived therefore attain the pre-established objects.

## Claims

1. Sowing machine for distributing seeds on the ground, which is intended to be moved on the ground along an advancing direction (Y) and comprises:
- a support frame (2);
- sowing means (3) mounted on said support frame (2) adapted to distribute a plurality of seeds (S) via gravity on the ground, and comprising a manifold (20) susceptible of guiding the seeds (S) that fall towards the ground;
- sensor means (4) associated with said sowing means (3) and adapted to detect the passage of the seeds (S) which are distributed on the ground;
- mulching means (5), which comprise at least one reel wound with a cover cloth (6), and are mounted on said support frame (2) downstream with respect to said sowing means (3), in the advancing direction (Y) of said sowing machine, in order to extend said cover cloth (6) on the sown ground;
- cutting means (7) for cutting the cover cloth (6), mounted on said support frame (2) downstream with respect to said mulching means (5), in the advancing direction (Y) of said sowing machine, and adapted to make a plurality of through openings (61) in the cover cloth (6);
- a sensor for measuring speed (81), and for detecting the speed of the sowing machine;
- a logic control unit (8) operatively connected to said sensor means (4), to said sensor for measuring speed (81) and to said cutting means (7);
wherein
said cutting means (7) are placed in proximity to the ground and are adapted to make the through openings (61) on said cover cloth (6) extended in abutment against the sown ground;
said logic control unit (8) being configured to detect the advancing speed (V) of said sowing machine (1) by means of said speed measurement module (81), in order to detect the sowing moment for each seed (S) by means of said sensor means (4) and in order to drive said cutting means (7) to make said plurality of through openings (61) in the areas of said cover cloth (6) susceptible of being extended at the seeds (S).

2. Sowing machine for distributing seeds on the ground according to claim 1, **characterized in that** said sowing means (3) comprise at least a containment hopper (19) for the seeds (S), wherein the manifold (20) is extended between an inlet section (21) susceptible of receiving the seeds (S) from said containment hopper (19) and an outlet section (22) facing the ground and susceptible of distributing the seeds (S) on the ground; said sensor means (4) being placed at the outlet section (22) of said manifold (20) and being adapted to detect the passage of the seeds (S) exiting from said manifold (20).

3. Sowing machine for distributing seeds on the ground according to any one of the preceding claims, **characterized in that** said mulching means (5) are adapted to extend said cover cloth (6) between a first height (X1), at which the reel is sustained with said cover cloth (6) wound, and a second height (X2), lower than said first height (X1) and susceptible of being placed in contact with the ground;
said cutting means (7) being provided with a cutting member (71) susceptible of intercepting said cover cloth (6) in said second height (X2) in order to make the through openings (61).

4. Sowing machine for distributing seeds on the ground according to claim 3, **characterized in that** the cutting member (71) of said cutting means (7) comprises at least one blade (9) associated with said support frame (2) and movable between a first position, distal with respect to said cover cloth (6) at said second height (X2), and a second position, for intercepting said cover cloth (6) at said second height (X2) in order to make said through openings (61).

5. Sowing machine for distributing seeds on the ground according to claim 3 or 4, **characterized in that** the cutting member (71) of said cutting means (7) comprises at least one compressed air flow susceptible of intercepting said cover cloth (6) at said second height (X2) in order to make said through openings (61).

6. Sowing machine for distributing seeds on the ground according to claim 3 or 4, **characterized in that** the cutting member (71) of said cutting means (7) comprises at least one pressurized liquid jet susceptible of intercepting said cover cloth (6) at said second height (X2) in order to make said through openings (61).

7. Sowing machine for distributing seeds on the ground according to any one of the preceding claims, **characterized in that** said mulching means (5) comprise:
- at least one support element (51) for supporting the reel wound with said cover cloth (6);
- at least one extending member (52) interposed between said support element (51) and the ground and adapted to unroll said cover cloth (6) from the reel and to extend it on the sown ground;
- at least one lateral earthing up member (53) placed downstream with respect to said extending member (52) in the advancing direction (Y) of said sowing machine and adapted to at least partially bury said cover cloth (6) extended on the sown ground in order to retain it in position.

8. Method for operating a sowing machine according to claim 1, said method providing for:
- a sowing step in which said sowing means (3) distribute a plurality of seeds (S) via gravity on the ground by means of a manifold (20) susceptible of guiding them towards the ground in order to obtain the sown ground and in which said sensor means (4) detect the passage of the seeds (S);
- a step of mulching the sown ground in which said mulching means (5) extend said cover cloth (6) on the sown ground;
- a cutting step in which said cutting means (7) make said plurality of through openings (61);
wherein
said cutting step is attained on the sown ground;
said cutting step is driven by said a logic control unit (8) which detects the passage of said seeds (S) by means of said sensor means (4) and the speed of said machine (1) by means of said sensor for measuring speed (81) and is configured to drive said cutting means (7) to make said plurality of through openings (61) in the areas of said cover cloth (6) susceptible of being extended at the seeds (S).

9. Method according to claim 8, comprising a processing step in which said logic control unit (8):
- detects the advancing speed (V) of said sowing machine by means of a speed measurement module (81);
- detects the sowing moment for each seed (S) by means of said sensor means (4);
- identifies the areas of said cover cloth (6) extended at the seeds (S);
- drives said cutting means (7) to make said through openings (61).

## Patentansprüche

1. Sämaschine zum Verteilen von Saatgut auf dem Boden, die für die Bewegung auf dem Boden entlang einer Vorschubrichtung (Y) bestimmt ist, umfassend:
- eine tragende Struktur (2);
- Säelemente (3), die auf der genannten tragenden Struktur (2) montiert sind, die dazu dienen, durch Schwerkraft Saatgut (S) auf dem Boden zu verteilen und die einen Kollektor (20) enthalten, der das Saatgut (S) steuern kann, das auf den Boden fällt;
- Sensorelemente (4), die den genannten Säelementen (3) zugeordnet werden und die dazu dienen, den Durchgang des Saatguts (S) zu erfassen, das auf dem Boden verteilt wird;
- Mulchelemente (5), die mindestens eine Spule umfassen, die mit einer Abdeckplane (6) umwickelt ist und die auf der genannten tragenden Struktur (2) hinter den genannten Säelementen (3) in der Vorschubrichtung (Y) der genannten Sämaschine montiert sind, um die genannte Abdeckplane (6) auf dem besäten Boden auszubreiten;
- Schneidmittel (7) der Abdeckplane (6), die auf der genannten tragenden Struktur (2) hinter den genannten Mulchelementen (5) in der Vorschubrichtung (Y) der genannten Sämaschine montiert sind und die dazu dienen, mehrere Durchgangsöffnungen (61) in der Abdeckplane (6) anzubringen;
- einen Geschwindigkeitsmesssensor (81), um die Geschwindigkeit der Sämaschine zu erfassen;
- eine logische Steuereinheit (8), die betriebsmäßig mit den genannten Sensorelementen (4), dem genannten Geschwindigkeitsmesssensor (81) und den genannten Schneidmitteln (7) verbunden ist;
wobei die genannten Schneidmittel (7) nahe am Boden angebracht sind und dazu dienen, die Durchgangsöffnungen (61) an der genannten Abdeckplane (6) anzubringen, die auf dem besäten Boden ausgebreitet ist;
die genannte logische Steuereinheit (8) wurde konfiguriert, um die Vorschubgeschwindigkeit (V) der genannten Sämaschine (1) durch das genannte Geschwindigkeitsmessmodul (81) zu erfassen, um den Säzeitpunkt jedes Saatguts (S) über die genannten Sensorelemente (4) zu erfassen und um die genannten Schneidmittel (7) zu steuern, damit sie mehrere Durchgangsöffnungen (61) in den Bereichen der genannten Abdeckplane (6) anbringen, die in Höhe des Saatguts (S) ausgebreitet werden können.

2. Sämaschine zum Verteilen von Saatgut auf dem Boden nach Anspruch 1, **dadurch gekennzeichnet, dass** die genannten Säelemente (3) mindestens einen Rückhaltetrichter (19) des Saatguts (S) umfassen, wobei sich der Kollektor (20) zwischen einem Eingangsabschnitt (21), der das Saatgut (S) aus dem genannten Rückhaltetrichter (19) erhalten kann, und einem Ausgangsabschnitt (22), der auf den Boden ausgerichtet ist und das Saatgut (S) auf dem Boden verteilen kann, erstreckt;
die genannten Sensorelemente (4) sind am Ausgangsabschnitt (22) des genannten Kollektors (20) positioniert und dienen dazu, den Durchgang des Saatguts (S) zu erfassen, das aus dem genannten Kollektor (20) austritt.

3. Sämaschine zum Verteilen von Saatgut auf dem Boden nach einem beliebigen der vorangegangenen Ansprüche, **dadurch gekennzeichnet, dass** die genannten Mulchelemente (5) dazu dienen, die genannte Abdeckplane (6) zwischen einem ersten Maß (X1), an dem die genannte Spule, mit der genannten Abdeckplane (6) umwickelt, gehalten wird, und einem zweiten Maß (X2), das kleiner als das genannte erste Maß (X1) ist und in Kontakt mit dem Boden positioniert werden kann, auszubreiten;
die genannten Schneidmittel (7) verfügen über ein Schneidelement (71), das die genannte Abdeckplane (6) am genannten zweiten Maß (X2) abfangen kann, um die Durchgangsöffnungen (61) anzubringen.

4. Sämaschine zum Verteilen von Saatgut auf dem Boden nach Anspruch 3, **dadurch gekennzeichnet, dass** das Schneidelement (71) der genannten Schneidmittel (7) mindestens ein Sägeblatt (9) umfasst, das der genannten tragenden Struktur (2) zugeordnet ist und das mobil zwischen einer ersten Position, distal zur genannten Abdeckplane (6) im genannten zweiten Maß (X2), und einer zweiten Abfangposition der genannten Abdeckplane (6) im genannten zweiten Maß (X2) ist, um die genannten Durchgangsöffnungen (61) anzubringen.

5. Sämaschine zum Verteilen von Saatgut auf dem Boden nach Anspruch 3 oder 4, **dadurch gekennzeichnet, dass** das Schneidelement (71) der genannten Schneidmittel (7) mindestens einen Druckluftfluss umfasst, der die genannte Abdeckplane (6) am genannten zweiten Maß (X2) erfassen kann, um die genannten Durchgangsöffnungen (61) anzubringen.

6. Sämaschine zum Verteilen von Saatgut auf dem Boden nach Anspruch 3 oder 4, **dadurch gekennzeichnet, dass** das Schneidelement (71) der genannten Schneidmittel (7) mindestens einen Druckflüssigkeitsstrahl umfasst, der die genannte Abdeckplane (6) am genannten zweiten Maß (X2) erfassen kann, um die genannten Durchgangsöffnungen (61) anzubringen.

7. Sämaschine nach einem beliebigen der vorangegangenen Ansprüche, **dadurch gekennzeichnet, dass** die genannten Mulchelemente (5) Folgendes umfassen:
- mindestens ein Stützelement (51) der Spule, die mit der genannten Abdeckplane (6) umwickelt ist;
- mindestens ein Ausbreitelement (52), das zwischen dem genannten Stützelement (51) und dem Boden positioniert ist und dazu dient, die genannte Abdeckplane (6) von der Spule abzuwickeln und sie auf dem besäten Boden auszubreiten;
- mindestens ein Element zum Anhäufeln auf der Seite (53), das hinter dem genannten Ausbreitelement (52) in der Vorschubrichtung (Y) der genannten Sämaschine positioniert ist und dazu dient, die genannte Abdeckplane (6), mindestens teilweise in die Erde zu graben, die auf dem besäten Boden ausgebreitet ist, um sie in ihrer Position zu halten.

8. Betriebsmethode einer Sämaschine nach Anspruch 1, wobei diese Methode für Folgendes sorgt:
- einen Säschritt, wobei die genannten Säelemente (3) Saatgut (S) durch Schwerkraft mithilfe eines Kollektors (20) auf dem Boden verteilen, der es in Richtung Boden steuern kann, um den besäten Boden zu erhalten und wobei die genannten Sensorelemente (4) den Durchgang des Saatguts (S) erfassen;
- einen Mulchschritt des besäten Bodens, wobei die genannten Mulchelemente (5) die genannte Abdeckplane (6) auf dem besäten Boden ausbreiten;
- einen Schneidschritt, wobei die genannten Schneidmittel (7) mehrere Durchgangsöffnungen (61) anbringen;
wobei
der genannte Schneidschritt auf dem besäten Boden ausgeführt wird;
der genannte Schneidschritt wird durch die genannte logische Steuereinheit (8) gesteuert, die den Durchgang des genannten Saatguts (S) über die Sensorelemente (4) und die Geschwindigkeit der genannten Maschine (1) über den genannten Geschwindigkeitsmesssensor (81) erfasst und die konfiguriert ist, um die genannten Schneidmittel (7) zu steuern, damit sie die genannten mehreren Durchgangsöffnungen (61) in den Bereichen der genannten Abdeckplane (6) anbringen, die in Höhe des Saatguts (S) ausgebreitet werden können.

9. Methode nach Anspruch 8, umfassend einen Verarbeitungsschritt, in dem die genannte logische Steuereinheit (8):
- die Vorschubgeschwindigkeit (V) der genannten Sämaschine durch ein Geschwindigkeitsmessmodul (81) erfasst;
- den Sämoment jedes Saatguts (S) durch die genannten Sensorelemente (4) erfasst;
- die Bereiche der genannten Abdeckplane (6) findet, die in Höhe des Saatguts (S) ausgebreitet sind;
- die genannten Schneidmittel (7) steuert, damit sie die genannten Durchgangsöffnungen (61) anbringen.

## Revendications

1. Semoir pour la distribution de graines sur le sol, qui est destiné à être actionné sur le sol le long d'un sens d'avancement (Y) et comprenant :
- un bâti-support (2) ;
- des moyens d'ensemencement (3) montés sur ledit bâti-support (2) aptes à distribuer sur le sol par gravité une pluralité de graines (S) et comprenant un collecteur (20) susceptible de guider les graines (S) qui tombent vers le sol ;
- des moyens de détection (4) associés auxdits moyens d'ensemencement (3) et aptes à détecter le passage des graines (S) qui sont distribuées sur le sol ;
- des moyens de paillage (5), qui comprennent au moins une bobine enroulée avec une toile de couverture (6) et sont montés sur ledit bâti-support (2) en aval desdits moyens d'ensemencement (3), dans le sens d'avancement (Y) dudit semoir, pour poser ladite toile de couverture (6) sur le sol ensemencé ;
- des moyens de coupe (7) de la toile de couverture (6) montés sur ledit bâti-support (2) en aval desdits moyens de paillage (5), dans le sens d'avancement (Y) dudit semoir, et aptes à pratiquer une pluralité d'ouvertures de passage (61) dans la toile de couverture (6) ;
- un capteur de mesure de vitesse (81), et pour détecter la vitesse du semoir ;
- une unité de commande logique (8) reliée fonctionnellement auxdits moyens de détection (4), audit capteur de mesure de vitesse (81) et auxdits moyens de coupe (7) ;
dans lequel lesdits moyens de coupe (7) sont placés à proximité du sol et sont aptes à pratiquer les ouvertures de passage (61) sur ladite toile de couverture (6) posée en appui sur le sol ensemencé ;
ladite unité de commande logique (8) étant configurée pour détecter la vitesse d'avancement (V) dudit semoir (1) par l'intermédiaire dudit module de mesure de vitesse (81), pour détecter l'instant d'ensemencement de chaque graine (S) à travers lesdits moyens de détection (4) et pour commander auxdits moyens de coupe (7) de pratiquer ladite pluralité d'ouvertures de passage (61) dans les zones de ladite toile de couverture (6) susceptibles d'être posées au niveau des graines (S).

2. Semoir pour la distribution de graines sur le sol selon la revendication 1, **caractérisé en ce que** lesdits moyens d'ensemencement (3) comprennent au moins une trémie de confinement (19) des graines (S), dans laquelle le collecteur (20) se développe entre une section d'entrée (21) susceptible de recevoir les graines (S) de ladite trémie de confinement (19) et une section de sortie (22) faisant face au sol et susceptible de distribuer les graines (S) sur le sol ;
lesdits moyens de détection (4) étant disposés au niveau de la section de sortie (22) dudit collecteur (20) et étant aptes à détecter le passage des graines (S) sortant dudit collecteur (20).

3. Semoir pour la distribution de graines sur le sol selon l'une quelconque des revendications précédentes, **caractérisé en ce que** lesdits moyens de paillage (5) sont aptes à poser ladite toile de couverture (6) entre une première hauteur (X1), au niveau de laquelle la bobine est supportée étant enroulée conjointement à ladite toile couverture (6), et une seconde hauteur (X2), inférieure à ladite première hauteur (X1) et susceptible d'être disposée en contact avec le sol ;
lesdits moyens de coupe (7) étant pourvus d'un élément de coupe (71) susceptible d'intercepter ladite toile de couverture (6) au niveau de ladite seconde hauteur (X2) pour pratiquer les ouvertures de passage (61).

4. Semoir pour la distribution de graines sur le sol selon la revendication 3, **caractérisé en ce que** l'élément de coupe (71) desdits moyens de coupe (7) comprend au moins une lame (9) associée audit bâti-support (2) et mobile entre une première position, distale par rapport à ladite toile de couverture (6) au niveau de ladite seconde hauteur (X2), et une seconde position, d'interception de ladite toile de couverture (6) au niveau de ladite seconde hauteur (X2) pour pratiquer lesdites ouvertures de passage (61).

5. Semoir pour la distribution de graines sur le sol selon la revendication 3 ou 4, **caractérisé en ce que** l'élément de coupe (71) desdits moyens de coupe (7) comprend au moins un flux d'air comprimé susceptible d'intercepter ladite toile de couverture (6) au niveau de ladite seconde hauteur (X2) pour pratiquer lesdites ouvertures de passage (61).

6. Semoir pour la distribution de graines sur le sol selon la revendication 3 ou 4, **caractérisé en ce que** l'élément de coupe (71) desdits moyens de coupe (7) comprend au moins un jet de liquide sous pression susceptible d'intercepter ladite toile de couverture (6) au niveau de ladite seconde hauteur (X2) pour pratiquer lesdites ouvertures de passage (61).

7. Semoir pour la distribution de graines sur le sol selon l'une quelconque des revendications précédentes, **caractérisé en ce que** lesdits moyens de paillage (5) comprennent :
- au moins un élément de support (51) de la bobine enroulée conjointement à ladite toile de couverture (6) ;
- au moins un élément de pose (52) interposé entre ledit élément de support (51) et le sol et apte à dérouler ladite toile de couverture (6) de la bobine et à l'étaler sur le sol ensemencé ;
- au moins un élément de buttage latéral (53) disposé en aval par rapport audit élément de pose (52) dans le sens d'avancement (Y) dudit semoir et apte à enfouir au moins partiellement ladite toile de couverture (6) posée sur le sol ensemencé pour la maintenir en position.

8. Procédé de fonctionnement d'un semoir selon la revendication 1, qui comporte :
- une étape d'ensemencement dans laquelle lesdits moyens d'ensemencement (3) distribuent une pluralité de graines (S) par gravité sur le sol par l'intermédiaire d'un collecteur (20) susceptible de les guider vers le sol afin d'obtenir le sol ensemencé et dans laquelle lesdits moyens de détection (4) détectent le passage des graines (S) ;
- une étape de paillage du sol ensemencé dans laquelle lesdits moyens de paillage (5) posent ladite toile de couverture (6) sur le sol ensemencé ;
- une étape de coupe dans laquelle lesdits moyens de coupe (7) pratiquent ladite pluralité d'ouvertures de passage (61) ;
dans lequel
ladite étape de coupe est effectuée sur le sol ensemencé ;
ladite étape de coupe est contrôlée par ladite unité de commande logique (8) qui détecte le passage desdites graines (S) par l'intermédiaire desdits moyens de détection (4) et la vitesse dudit semoir (1) au moyen dudit capteur de mesure de vitesse (81) et est configurée pour commander auxdits moyens de coupe (7) de pratiquer ladite pluralité d'ouvertures de passage (61) dans les zones de ladite toile de couverture (6) susceptibles d'être posées au niveau des graines (S).

9. Procédé selon la revendication 8, comprenant une étape de traitement dans laquelle ladite unité de commande logique (8) :
- détecte la vitesse d'avancement (V) dudit semoir par l'intermédiaire d'un module de mesure de vitesse (81) ;
- détecte l'instant d'ensemencement de chaque graine (S) par l'intermédiaire desdits moyens de détection (4) ;
- détermine les zones de ladite toile de couverture (6) posées au niveau des graines (S) ;
- commande auxdits moyens de coupe (7) de pratiquer lesdites ouvertures de passage (61).
